# EUROPEAN PATENT APPLICATION

(11) **EP 2 431 333 A2**
(43) Date of publication of application: **21.03.2012**
(21) Application number: 11180926.5
(22) Date of filing: 12.09.2011
(51) Int. Cl.: C02F 1/28, C02F 3/32, B01J 20/06, B01J 20/12, B01J 20/32

(54) **Effluent treatment**

(30) Priority: 16.09.2010 GB 1015484
(71) Applicant: Greener Waste Limited, Wakefield Leeds WF1 2QP (GB)
(72) Inventor: Christian, Stuart, Wakefield, WF1 2QP (GB)
(74) Representative: Neilson, Martin Mark

(57) **Abstract**

A phosphate removal medium (200) comprising clay (201) naturally or synthetically infused with iron oxide and suitable to treat and remove phosphate from waste water and in particular a pre-treated sewage treatment liquor as part of a final sewage processing operation. The treatment medium may be accommodated within filters and filter cartridges for the convenient installation within a sewage treatment process. Additionally, the phosphate removal medium may be incorporated within a modular reed bed.

## Description

The present invention relates to effluent treatment and in particular, although not exclusively, to apparatus and method for removing phosphorous from treated effluent.

Sewage or waste water treatment is typically a multistep process and includes physical, chemical and biological treatment to remove contaminants such that the runoff water is suitable for reintroduction to a watercourse.

Conventional sewage treatment involves three fundamental stages. A primary treatment involves storage of sewage in a container to allow heavy solids to settle at the bottom whilst oils and fats float to the surface. The settled and floating materials may then be removed and discharged for subsequent treatment. Secondary treatment involves removal of suspended biological matter within the already treated effluent. Secondary treatment processes include trickling filters, rotating biological contactors, suspended growth systems and constructed reed beds to degrade the biological content of the sewage and to further separate suspended particulate matter within the effluent prior to further processing. Tertiary treatment is typically regarded as the final stage of effluent processing prior to reintroduction to the watercourse. Conventional tertiary treatments specifically include removal of high levels of nutrients such as nitrogen and phosphorous components. Phosphorous can be a particular environmental problem as high levels lead to eutrophication of the water system resulting in growth and decomposition of oxygen-depleting plants and is hazardous to aquatic life that inhabits the water system into which treated water is discharged.

Conventionally, phosphorous treatment is undertaken via one or two approaches. Phosphorous concentration may be reduced biologically using specific bacteria that accumulate large quantities of phosphorus within their cells to provide an enriched biomass which may then be separated from the treated water. Alternatively, phosphorous may be removed by chemical precipitation using ferric chloride or ferric sulphate. However, these compounds are highly acidic which, introduces significant health and safety and pH control considerations. Furthermore, this conventional chemical processing requires considerable control and monitoring to avoid overdosing. This is disadvantageous for smaller treatment works where it may be difficult to control and maintain administration of iron based chemicals.

What is required is a means for efficient phosphorous removal from treated effluent that may be used conveniently without rigorous control measures, does not provide additional disadvantages such as the creation of extra bio-sludge or downstream toxification and can be readily interchanged once exhausted.

The inventors provide a phosphorus removal medium that may be granulated and comprises an active component at the granule surface to remove phosphorous as it flows in contact with the granules.

According to a first aspect of the present there is provided a phosphate removal sewage treatment medium comprising: clay particles; and iron oxide infused within and/or coating the clay particles.

The iron oxide is preferably iron (III) oxide (Fe₂O₃). In particular and preferably the iron oxide is ochre from a natural source such as a mine, river, dam or stream.

Optionally, the clay particles comprise: clay pellets; clay granules; pieces of clay ceramic. In particular, the pieces of clay ceramic may comprise unglazed broken pot or pipe. In particular, the size of the broken pieces may be approximately in the range 1cm³ to 20cm³. Preferably, the medium comprises 5 to 30% by weight of iron oxide and 70 to 95% by weigh clay. Optionally, the medium may further comprise additional additives to provide further functionality to the medium and in particular removal of other components from the sewage treatment liquor. Optionally, the medium may further comprise any one or a combination of the following set of additives: aluminium oxide; calcium carbonate; magnesium carbonate.

Preferably, the clay particles comprise terracotta clay. Optionally, the clay particles comprise an unglazed terracotta clay-based ceramic. Reference within this specification to a ceramic includes a clay that is being baked or kiln fired. Preferably, the clay particles comprise iron (III) oxide enriched clay.

Preferably, the medium further comprises powdered iron oxide and in particular iron (III) oxide. The powdered iron oxide may be added to the clay particles that have already been baked or kiln fired. The powdered iron (III) oxide coats the external surface of the clay particles and is also accommodated within the porous clay body. Due to the external structural of clay ceramic, the powdered iron is trapped at the surface of the ceramic.

According to a second aspect of the present invention there is provided a sewage treatment phosphate removal filter comprising: a main body defining an internal chamber, the main body having an inlet and an outlet; a phosphate removal medium as described herein accommodated within the internal chamber.

Preferably, the main body of the filter comprises a clay, a plastic or steel. Optionally, the filter further comprises a lid. Preferably, the filter further comprises a gasket positioned at the main body and the lid to provide a fluid tight seal at the region of the lid. Preferably, the filter further comprises a gauze or mesh positioned at the inlet and outlet to contain the phosphate removal medium within the internal chamber.

According to a further aspect, the filter further comprises a control unit to control a pump connected to the filter, the pump configured to direct a liquor to be treated through the filter. Preferably, the control comprises a processor, data storage and wireless communication means to receive and/or output data from the control unit relating to the flow characteristics of the water flowing through the filter and/or chemical, physical and mechanical information relating to the waste water being treated and/or the phosphate removal medium within the internal chamber.

According to a third aspect of the present invention there is provided filtration bed for treating run-off liquor from a sewage treatment plant comprising: water impermeable sidewalls and a base that define a trough; a plurality of baskets arranged over the base between the sidewalls to provide a grid arrangement of baskets, the baskets having sidewalls that allow the through flow of water so that water to be treated can flow through the baskets from an input end of the bed to an output end of the bed; a primary medium within the baskets to assist filtration of the waste water; reed plants planted in the primary medium; a phosphate removal medium as described herein within the baskets and configured to remove phosphate from the waste water, the phosphate removal medium positioned downstream of the primary medium and the reed plants; wherein individual baskets may be removed and reinstalled at the bed without disrupting the medium within neighbouring baskets.

According to a fourth aspect of the present invention there is provided a method of manufacturing a sewage treatment phosphate removal medium comprising: obtaining iron oxide particles; mixing the iron oxide particles with clay such that the clay is infused and/or coated with the iron oxide; baking the iron oxide and clay; and cutting the resultant solid clay to form clay particles infused and/or coated with the iron oxide to form the sewage treatment phosphate removal medium.

According to a fifth aspect of the present invention there is provided a method of sewage treatment comprising: filtering run-off liquor from a sewage treatment process with a phosphate removal medium comprising clay particles infused and/or coated with iron oxide.

According to a sixth aspect of the present invention there is provided sewage treatment apparatus comprising: at least one reed bed having a filtration medium to filter waste water and reed plants planted in the filtration medium; and a phosphorus removal filter bed connected in series with the at least one reed bed in fluid communication; the phosphorous removal bed comprising a filtration medium as described herein comprising a natural clay particulate coated and/or infused with iron (III) oxide.

According to a seventh aspect of the present invention there is provided a sewage treatment process comprising filtering treated effluent fluid with a phosphorus removal media comprising clay particulates infused and/or saturated and/or coated with naturally occurring iron (III) oxide, typically referred to as ochre.

A specific implementation of the present invention will now be described by way of example only and with reference to the accompanying drawings in which:
figure 1 is a schematic flow diagram of the process for creating the phosphorous removal filter medium according to a specific implementation;
figure 2 illustrates schematically the clay based particulate filter medium comprising a ferrous oxide component resultant from the process of figure 1;
figure 3 illustrates schematically utilisation of the phosphorous removal medium as part of a modular reed bed according to a specific implementation; and
figure 4 illustrates schematically instillation of the phosphorus removal media as a filter cartridge at the downstream end of a sewage treatment plant having distinct treatment stages according to a specific implementation;
figure 5 is a cross-sectional side view of two phosphate removal filters connected in series according to a specific implementation;
figure 6 is a perspective view of a phosphate removal unit comprising a plurality of phosphate removal filters connected in series and coupled to a control unit housed within and ISO container according to a specific implementation;
figure 7 is a photograph of a phosphate removal medium being brick red short rods (50mm length and 30mm diameter);
figure 8 is a photograph of a phosphate removal medium being brick red/brown dusty rods (80mm length and 30mm diameter);
figure 9 is a photograph of a phosphate removal medium being brick grey/brown pellets (6mm to 10mm diameter);
figure 10 is a photograph of a phosphate removal medium being brick grey/brown sinted pellets (15m to 20mm diameter);
figure 11 is a photograph of a phosphate removal medium being brick red/brown granular dust (less than 1mm diameter);
figure 12 is a graph of the relationship between pH and orthophosphate removal by an iron oxide containing clay medium mixed with 500 ml of an effluent containing 8.6 mg/l orthophosphate;
figure 13 is a graph of the relationship between pH and orthophosphate removal by an iron oxide containing clay medium mixed with 500 ml of an effluent containing 3.1 mg/l orthophosphate;
figure 14 is a graph of the relationship between pH and orthophosphate removal by an iron oxide containing clay medium mixed with 500 ml of an effluent containing 3.8 mg/l orthophosphate.

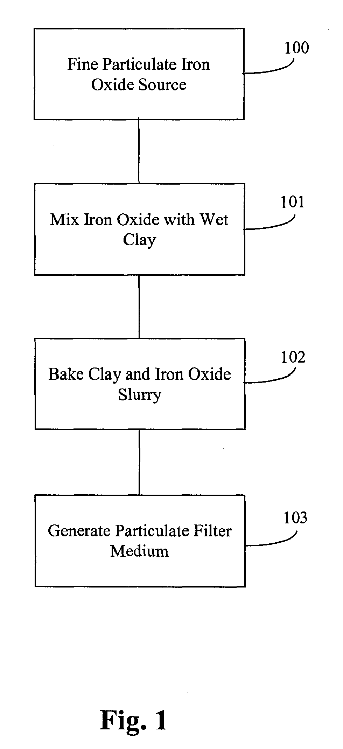

The inventors have identified an advantageous use of a new ferrous oxide based media for phosphorus removal in the final stage treatment of sewage effluent. Referring to figure 1, ferrous oxide is obtained from a natural source such as a mine or river. The ferrous oxide typically occurs as ochre which is hydrated iron (III) oxide. This yellow ochre (Fe₂O₃·H₂O) also occurs in the anhydride form as red ochre or as the partly hydrated iron oxide (rust) which is typically brown. The iron oxide ochre particulates are obtained at stage 100 by aerating natural ochre water obtained from the mine or river. The very fine ochre particulates (which may be regarded as dust particles) are then separated via a number of alternative processes such as floating, settling or by belt process.

The iron oxide particulates are then mixed with natural clay at stage 101. The wet clay and iron oxide slurry is mixed thoroughly such that the very fine particulate ochre is uniformly dispersed within the body of the wet clay, including specifically the outer surface of the clay. At stage 102, the clay and iron oxide slurry is baked, typically in an oven or autoclave at the optimum temperature. The optimum temperature is determined so as to ensure the resultant baked clay is solid (being substantially free of water) but comprises the optimum degree of porosity. Accordingly, the very fine particulate ochre is bound integrally (or infused) with the clay both on the surface and internally within the clay body.

The resulting clay iron oxide solid mass is then chopped to generate a particulate filter medium at stage 103 being optimised specifically for phosphorus removal from sewage effluent.

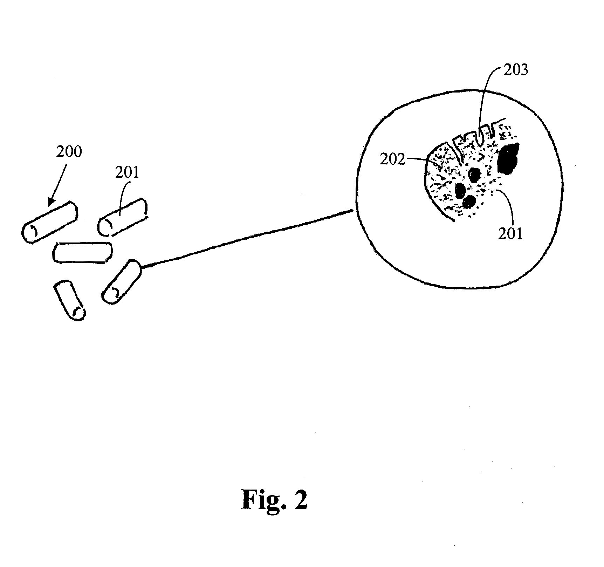

Referring to figure 2, the particulate medium may be formed as pellets 200 of an optimum size so as to be both conveniently handled during use at the treatment plant and to provide the optimum surface area contact with the sewage effluent as it flows over the filter medium in contact with the very fine ochre particulates 202 bound to the clay 201. In particular, the porosity of the clay 203 effectively enhances the available surface area for contact with the effluent flow. Moreover, it is possible to tailor the performance of the present filter medium by increasing or decreasing the surface area (in particular porosity) of the clay particulates to selectively remove a predetermined amount of phosphorus from the effluent fluid flow. For example, the present filter medium, when used in a typical final stage effluent treatment phase may be configured to remove 6mg/L of phosphorous, being well above the 2mg/L legislative level required of conventional sewage treatment plants.

According to a specific implementation the surface area of each pellet 200 may be in the range 5 to 30mm². Additionally, the concentration of iron oxide and clay at stage 101 may be in the range 5 to 30% by weight of iron oxide (in particular 10% to 15% by weight ochre particulate) and 70 to 95% by weight of clay (in particular 85% to 95% by weight clay). The clay source may comprise any natural clay extracted directly from the ground comprising varying levels of iron oxide. Terracotta clay comprises a higher level of iron oxide and this type of clay may be used with the subject invention. Optionally, the clay be sourced from preformed clay pots or piping that are firstly broken, chopped or ground to the required size to form the pellet or gravel like granules illustrated with reference to figure 2. If rich in ferrous oxide, the clay granules may be used 'directly' as the phosphorus removal medium without addition of powdered ochre. Alternatively, the clay pieces may be enriched with ochre by coating the gravel medium with the powered ochre according to suitable processing steps.

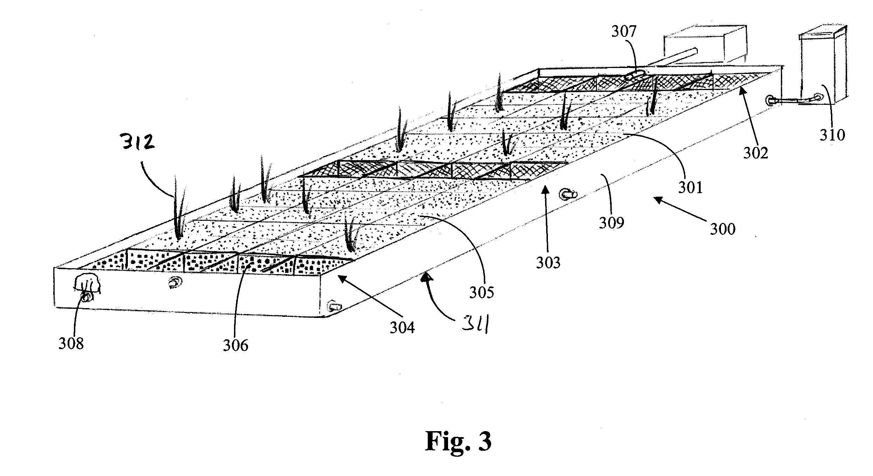

According to one implementation of the present treatment medium and referring to figure 3, the phosphorus removal pellets 200 are housed within baskets 301 and then loaded onto a modular reed bed 300. Bed 300 comprises side walls 309, and a base 311. The bed 300, via baskets 301 defines a plurality of different zones, each zone comprising a different type of filter medium to provide different treatment of the effluent liquor as it flows through the bed. A first quiet zone 302 is configured to remove ammonia and to provide a zone for augmentation of filtration bacteria introduced from assembly 310. An intermediate quiet zone 303 is configured to collect solids separated from the waste water as it flows from an input end 307 to and output end 308.

The first quiet zone 301 and the intermediate quiet zone 303 are separated by the modular baskets 301 containing filtration medium 305 suitable to support growth of reeds 312 which then act to provide for biological filtration of the effluent flow through the reed bed.

The filter medium 200 of the subject invention, housed within baskets 306 is positioned at the downstream end 304 of reed bed 300 to provide a final stage filtration treatment of the effluent liquor prior to discharge from the reed bed at outlet 308. According to the implementation of figure 3, the phosphorous removal media 200 is physically partitioned from the primary gravel-like media 305 that supports the reeds 312 and forms the majority of the reed bed filtration medium. I particular the primary medium occupies nearly two thirds of the bed and the phosphorous removal media 200 occupies nearly one third. Accordingly, as the present media 200 is exhausted following use, the baskets 306 may be readily interchanged to introduce fresh media for continuing processing without disruption to the surrounding media 200, 300.

According to further specific implementations, the present phosphorous removal media 200 may be loaded into baskets 306 of the type referred to in figure 3 such that the entire reed bed filter material comprises the phosphorous removal granules 200 over its entire length and width. This dedicated filter bed may then be positioned at the downstream end of modular or conventional reed beds as a separate final filtration stage.

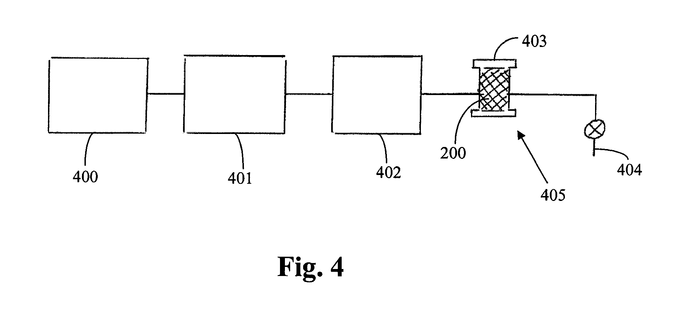

Figure 4 illustrates a further embodiment of the present invention. According to the further embodiment, a sewage treatment plant comprises a pre-treatment stage 400 that removes solid materials from the sewage slurry prior to discharge to a primary treatment phase 401. Within primary treatment 401, solids are separated from the effluent liquid which is then discharged to a secondary treatment phase 402. Phase 402 typically comprises biological processing using water-borne microorganisms managed in a controlled habitat. Such secondary treatment may comprise the reed bed treatment as described with reference to figure 3. The treatment plant comprises a final phosphorous removal cartridge 403 housing the present granular phosphorous removal media 200. This phosphorous removal is undertaken as a final tertiary treatment phase 405 prior to discharge 404 into a suitable watercourse or other downstream application.

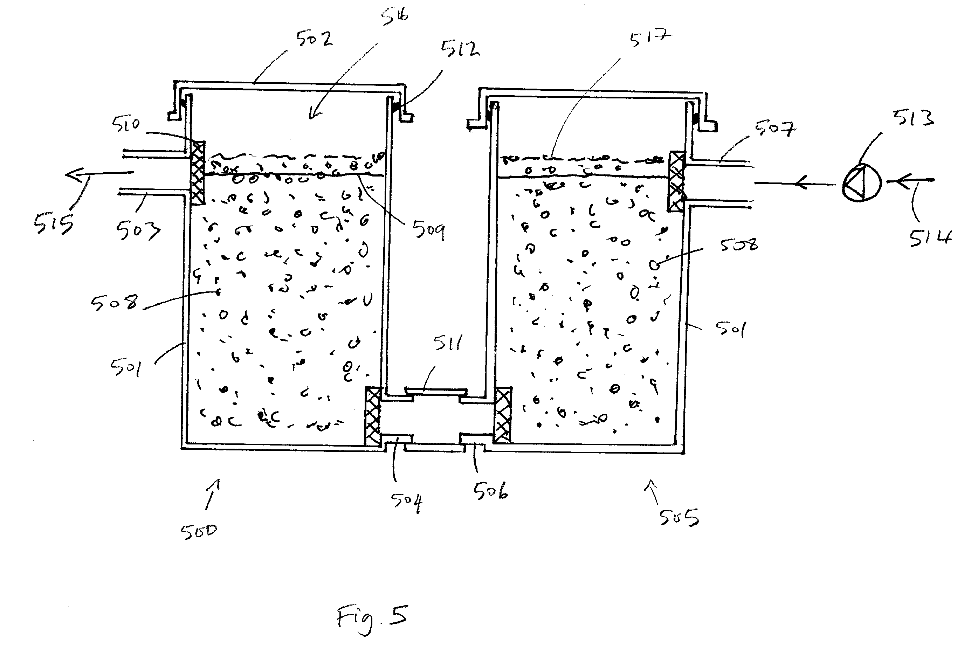

Referring to figure 5, the present phosphate removal medium may be accommodated within a one or a plurality of treatment filters connected in series to provide a filtration unit. The modular unit comprises a first treatment filter 500 having a main body 501 that defines an internal chamber 516. According to specific implementations, main body 501 is a clay, plastic or a steel material. In particular, the main body 501 may be formed from a clay ceramic pipe having a closed first end and an open second end.

Filter 500 comprises an inlet 504 and outlet 503 providing a liquid communication flow path through internal chamber 516. A respective gauze or mesh screen 510 is positioned to extend across each inlet 504 and outlet 503. Internal chamber 516 is capable of accommodating the present phosphate removal medium 508 formed as pellets, granules, gravel, powder or broken pieces of unglazed clay pottery (including pipes and particles).

A lid 502 extends over the open end of filter 500 so as to close the internal chamber 516. A fluid tight gasket seal 512 is positioned between lid 502 and main body 501 to provide a fluid tight seal. Gasket 512 is configured such that as the pressure within internal chamber 516 is increased, the strength of the seal between main body 501 and lid 502 is also increased proportionally.

The filtration unit further comprises a second filter 505 coupled in series to first filter 500 and in fluid communication. Filter 505 comprises the same features as filter 500 including inlet 507, outlet 506, mesh inserts 510, lid 502 and seal 512. The inlet 504 of filter 500 and the outlet 506 of filter 505 are positioned to approximately collinear and are connected via a deformable duct 511 such as a rubber hose. Additional gaskets, seals and attachment means (not shown) are also provided to maintain duct 511 in fluid type contact with the inlet 504 and outlet 506 of respective filters 500, 505.

The filtration unit 500, 505 further comprises a water submergible pump 513 positioned upstream of inlet 507 of filter 505. Pump 513 is controlled by a suitable control unit (not shown) and is operable to receive a sewage liquor 514 downstream from a sewage treatment plant or works as part of a waste water treatment process and then to supply this liquor to be filtered through the in-series connected phosphate removal filters 505, 500. The treatment liquor flows into inlet 507, in contact with the phosphate removal medium 508 within both filters 505, 500 to then exits 515 via outlet 503. Additional sensors and monitoring devices (not shown) may be provided at various positions along the fluid flow path through the filtration unit 505, 500 so as to enable automated monitoring of the conditions of the sewage treatment liquor as it flows in contact with the phosphate removal medium.

According to further embodiments, the phosphate removal medium 508 may be doped with additional additives to remove additional components from the sewage treatment liquor. In particular, aluminium oxide, calcium carbonate and magnesium carbonate may be accommodated within the internal chambers 516 as part of the treatment medium 508. These additives may be specifically configured to remove pharmaceuticals from the effluent fluid including in particular pharmaceutical based contraceptives (hormones) and heavy metals.

The control unit (not shown) is coupled to pump 513 so as to regulate and control the flow rate of the waste water through filters 505, 500. In particular, the pump 513 may be regulated to ensure the liquid level 509 within both filters 505, 500 is below the height 517 of the filtration medium 508 within internal chambers 506 such that the effluent liquor is always in contact with the treatment medium 508 as it flows through the filters 505, 500.

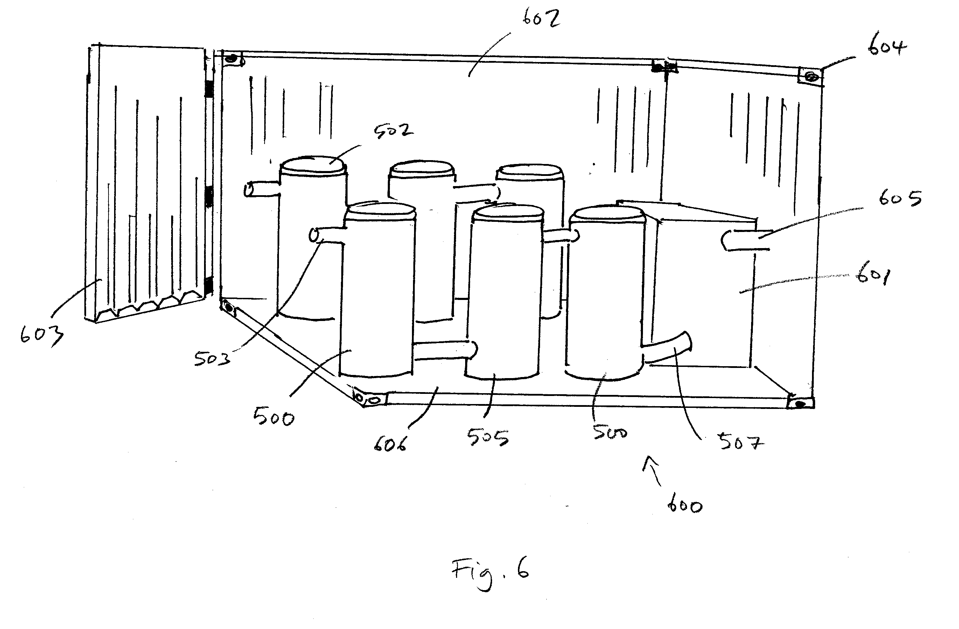

Referring to figure 6, the present phosphate removal filtration filters or cartridges may be accommodated within a transportable cargo container, such as an ISO container so as to provide a sewage treatment unit 600 transportable between sewage treatment sites.

The treatment unit 600 comprises a plurality of in-series connected phosphate removal filters 500, 505. Each line of in-series filters is coupled to a control unit 601 to control and regulate effluent treatment flow through the in-series connected filters 500, 505. According to the specific implementation, a duct 507 is positioned between the last filter 500 of each series and the control 601. Control 601 comprises an inlet/outlet 605 to enable the through-flow of fluid. Control 601 comprises electronic control means, sensors and other operational control apparatus and electronics (not shown) useful for the regulation of treatment fluid flow through the unit 600 and the performance monitoring of the filtration medium 508 within each cartridge 500, 505. In particular, control unit 601 may comprises a water submergible pump or other flow regulator, a processor, a data storage device, a wireless communication device, computer software and hardware.

The ISO-container comprises side walls 602, a base 606 and a roof (not shown). Doors 603 are positioned at one end of the container and allow access into the chamber interior accommodating the filters and control unit. In use, the filtration unit 600 is transported to a sewage treatment site and is then coupled in fluid communication with the fluid treatment process via inlet 605 and outlet 503. Pre-treated sewage liquor is then supplied to the treatment unit 600 via inlet 605 to then flow through each of the plurality of filters 500, 505 for phosphate removal. Each filter 500, 505 may be recharged with iron oxide, following extended use, by removing lid 502 adding powdered iron oxide into the chamber interior 516 and then resealing lid 502 in position at main body 501. As the treatment liquor flows through the filter 500, 505, the powdered iron oxide diffuses through the gravel 508 and coats the external surface of the medium 508 to recharge the phosphate removal characteristics of the filter 500, 505.

The phosphate removal unit 600 may be disconnected from the sewage treatment plant and then conveniently transported (via a flat back lorry or the like) to the next treatment location as required.

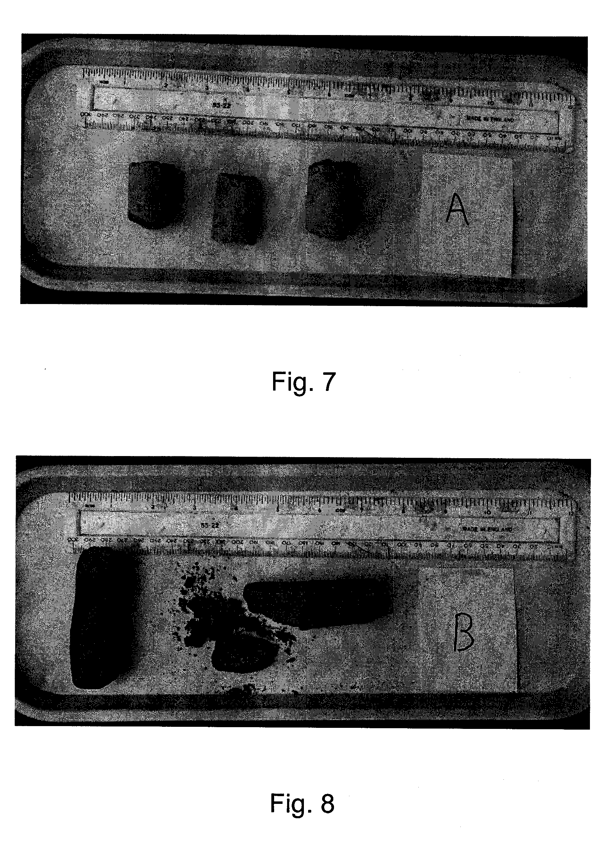

Figures 7 to 11 are photographs of various examples of the present phosphate removal medium.

### Example 1- Media A

Referring to figure 7, the phosphate removal medium comprises naturally sourced brick red terracotta clay. The clay is rolled into elongate cylinders and baked within a kiln to provide a terracotta clay ceramic. The elongate cylinders are then chopped to provide large terracotta clay pellets of approximately 35 mm diameter and 50 mm length.

The pellets when dry and wet were found to be resilient to crumbling or crushing.

### Example 2 - Media B

Referring to figure 8, the phosphate removal medium comprises naturally sourced terracotta clay infused with iron oxide and produced according to the process described with reference to figure 1. The iron oxide infused clay ceramic was chopped or cut to provide large pellets of approximate diameter 35 mm and 80 mm length.

The pellets when dry and wet were found crumble easily. When wet, the pellets discoloured water to provide a red/brown suspension.

### Example 3 - Media C

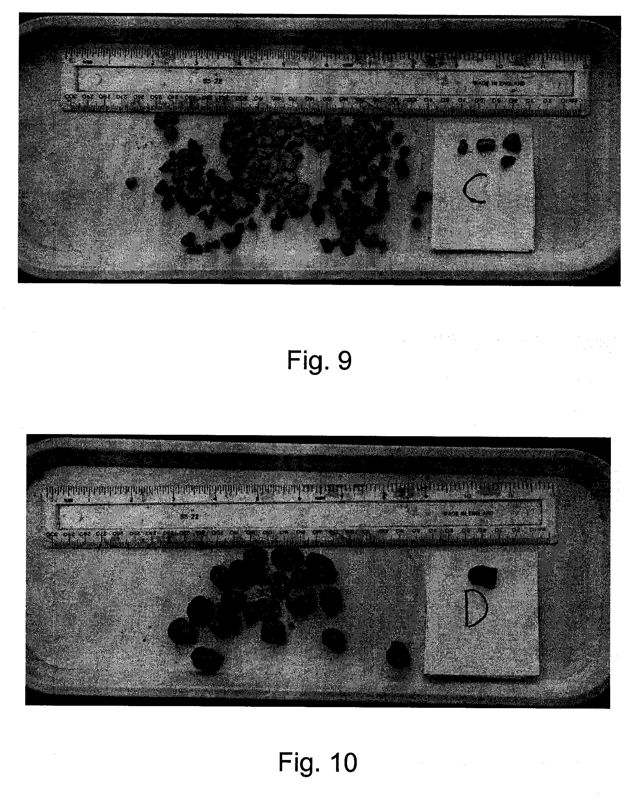

Referring to figure 9, the phosphate removal medium comprises naturally sourced terracotta clay air blown and infused with iron oxide and produced according to the process described with reference to figure 1. The small gravel like particles comprise an approximate diameter of 4 to 10 mm.

The pellets when dry were found to fracture (clean) when struck by a hammer and have a black internal appearance. When wet, 20% of the pellets were observed to float and fracture (clean) when struck by a hammer. The pellets had a black appearance inside.

### Example 4 - Media D

Referring to figure 10, the phosphate removal medium comprises naturally sourced terracotta clay air blown and infused with iron oxide and produced according to the process described with reference to figure 1. The grey/brown pellets were not infused or coated with iron oxide. The ball like particles comprise an approximate diameter of 10 to 15 mm diameter.

The pellets when dry were found to fracture (clean) when struck by a hammer and have a black internal appearance. When wet, 100% of the pellets were observed to float and the pellets fracture (with some crumbling) when struck by a hammer.

### Example 5 - Media E

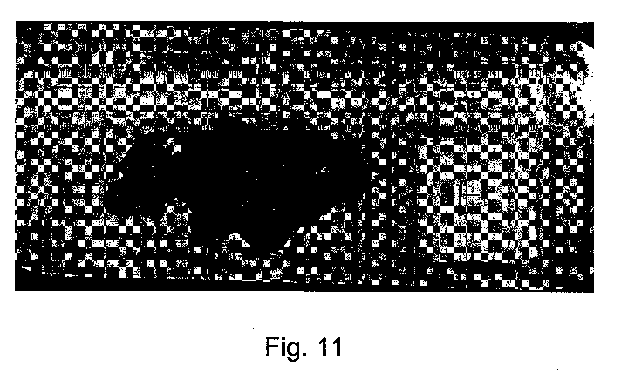

Referring to figure 11, the phosphate removal medium comprises naturally sourced terracotta clay and infused with iron oxide and produced according to the process described with reference to figure 1. The red/brown granular dust comprises particles of approximate diameter 1 to 2 mm.

The red/brown granular dust was observed to colour water but settled to the bottom of the tank/container to leave a clear liquid.

### Experimental Investigation

### Test 1

1.0 gm of each media A to E was placed in respective beakers and mixed with 500 ml of an effluent containing 8.6 mg/l orthophosphate (P04). The beakers were mixed well every 15 minutes for 2 hours when P04 was measured.

It was observed that PO4 removal was similar across all media A to E over the first 2 hours. Little change was seen over the second 2 hours. The results are shown in Table 1.

**Table 1.**

| Time | Media A | | Media B | | Media C | | Media D | | Media E | |
|---|---|---|---|---|---|---|---|---|---|---|
| Hours | pH | P04 | pH | P04 | pH | PO4 | pH | PO 4 | pH | P04 |
| 0 | 7.14 | 8.6 | 7.14 | 8.6 | 7.14 | 8.6 | 7.14 | 8.6 | 7.14 | 8.6 |
| 2 | 7.33 | 6.5 | 7.32 | 6.8 | 7.28 | 6.8 | 7.36 | 6.6 | 7.4 | 6.1 |
| 4 | 7.47 | 6.5 | 7.49 | 6.5 | 7.36 | 6.7 | 7.52 | 6.5 | 7.55 | 6.5 |

The liquid in each beaker was then changed, leaving the original media in place and the P04 removal observed again. The results are shown in Table 2.

**Table 2.**

| Time | Media A | | Media B | | Media C | | Media D | | Media E | |
|---|---|---|---|---|---|---|---|---|---|---|
| Hours | pH | P04 | pH | P04 | pH | PO4 | pH | P04 | pH | PO4 |
| 0 | 7.2 | 8.8 | 7.2 | 8.8 | 7.2 | 8.8 | 7.2 | 8.8 | 7.2 | 8.8 |
| 2 | 7.18 | 7.1 | 7.19 | 7.2 | 7.16 | 7.1 | 7.19 | 7.0 | 7.19 | 6.9 |
| 4 | 7.15 | 7.1 | 7.2 | 7.0 | 7.15 | 7.1 | 7.09 | 7.2 | 7.2 | 6.5 |

The results suggested that under the conditions prevailing some 2 mg/l of P04 could be removed easily. The remainder did not remove. The further suggestion is that the media was not exhausted.

It was interesting to note that the pH of the solutions increased during the first test but decreased slightly during the second test detailed below.

Three of the media samples B, C and E were then chosen to examine the effect of different pH and the results are shown in Table 3.

**Table 3.**

| Time | Media A | | Media B | | Media C | | Media D | | Media E | |
|---|---|---|---|---|---|---|---|---|---|---|
| Hours | pH | PO4 | pH | P04 | pH | P04 | pH | P04 | pH | P04 |
| 0 | | | 8.0 | 7.0 | 4.0 | 7.1 | | | 8.2 | 6.5 |
| 2 | | | 7.95 | 3.8 | 4.25 | 6.8 | | | 8.2 | 1.8 |
| 4 | | | | | | | | | | |

### Test 2

1.0 gm of each media A to E was placed in respective beakers and mixed with an effluent containing 3.1 mg/l PO4 at pH 7.55 until the medium was saturated with effluent. This saturation was undertaken to try and simulate typical operational conditions within a sewage treatment reed bed. The beakers were mixed well every 15 minutes for 2 hours when PO4 was measured. The results are shown in Table 4.

**Table 4.**

| Time | Media A | | Media B | | Media C | | Media D | | Media E | |
|---|---|---|---|---|---|---|---|---|---|---|
| Hours | pH | PO4 | pH | P04 | pH | P04 | pH | PO4 | pH | P04 |
| 0 | 7.55 | 3.1 | 7.55 | 3.1 | 7.55 | 3.1 | 7.55 | 3.1 | 7.55 | 3.1 |
| 2 | 8.57 | 2.0 | 8.03 | 2.2 | 8.95 | 0.0 | 7.8 | 2.4 | 10.6 | 0.0 |

The Media A to E was then washed and left overnight and the pH determined. The pH results were media A 8.71; media B 8.22; media C 8.85; media D 8.11; media E 9.8.

The effluent was then changed in each beaker and pH checked every 30 minutes. The results are shown in Table 5.

**Table 5.**

| Time | Media A | | Media B | | Media C | | Media D | | Media E | |
|---|---|---|---|---|---|---|---|---|---|---|
| Hours | pH | PO4 | pH | P04 | pH | PO4 | pH | P04 | pH | PO4 |
| 0.5 | 7.91 | | 7.88 | | 8.01 | | 7.81 | | 10.1 | |
| 1.0 | 8.13 | | 8.03 | | 8.3 | 1.2 | 7.88 | | 10.3 | 0 |
| 1.5 | 8.04 | | 7.89 | | 7.68 | | 7.68 | | 10.02 | |
| 2.0 | 8.16 | 2.1 | 7.9 | 2.2 | 7.81 | 0.5 | 7.69 | 2.2 | 10.38 | |

The media was then 'washed' a further 7 times (10 cycles in total) by filling with fresh effluent, agitating and discarding after 2 hours. The purpose of this washing process was to ensure any observed PO4 removal or pH change effects were not due to initial surface contamination or dust.

### Test 3

1.0 gm of each media A to E was placed in respective beakers and mixed with 500 ml of an effluent containing 3.8 mg/l orthophosphate at pH 7.65. The beakers were mixed well every 15 minutes for 2 hours when PO4 was measured. The results are shown in Table 4.

It was observed that P04 removal was similar across all media A to E over the first 2 hours. Little change was seen over the second 2 hours. The results are shown in Table 6.

**Table 6.**

| Time | Media A | | Media B | | Media C | | Media D | | Media E | |
|---|---|---|---|---|---|---|---|---|---|---|
| Hours | pH | PO4 | pH | P04 | pH | PO4 | pH | PO4 | pH | P04 |
| 0 | 7.65 | 3.8 | 7.65 | 3.8 | 7.65 | 3.8 | 7.65 | 3.8 | 7.65 | 3.8 |
| 2 | 8.2 | 1.7 | 8.0 | 1.9 | 8.0 | 1.3 | 8.02 | 2.0 | 9.85 | 0.1 |
| 4 | 8.7 | 1.3 | 8.27 | 1.7 | 8.83 | 0.7 | 8.12 | 2.0 | | |

It was noted that media E was a mix of dust and granules and that during the test some of the lighter particles were lost with the discarded washes. To a lesser extent some losses were also observed from media B.

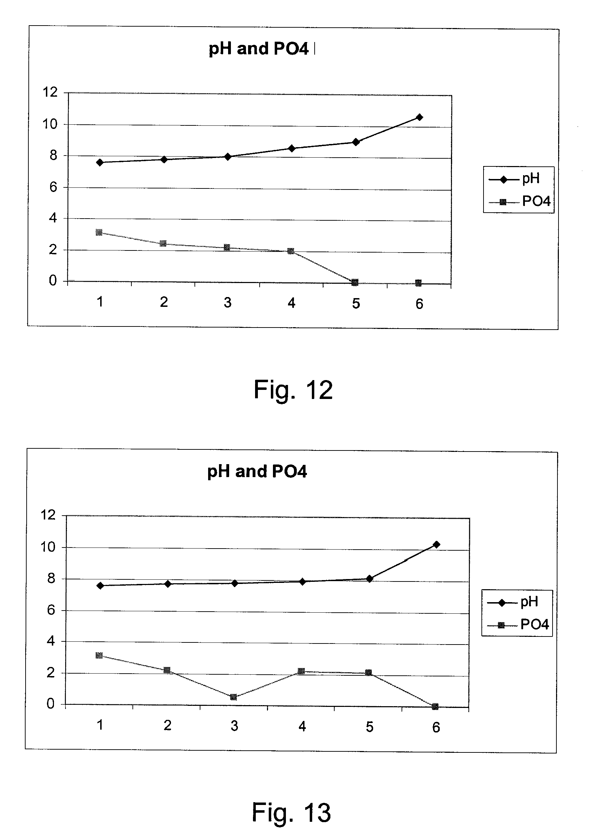

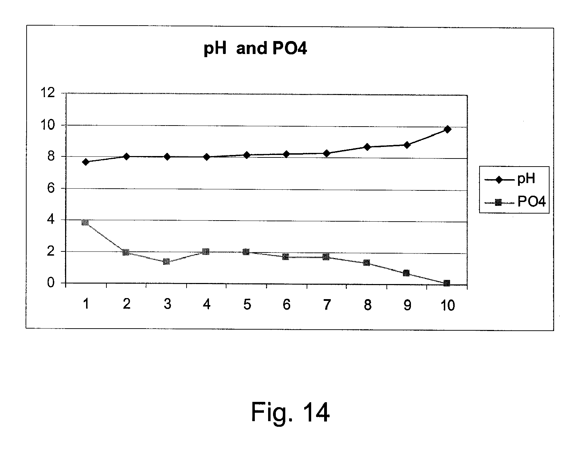

The pH change and PO4 removal results for each media A to E as detailed above are represented graphically referring to figures 12 to 14 corresponding to tests 1 to 3, respectively. Figures 12 to 14 illustrate a relationship between increasing pH and decreasing PO4.

The highest pH and corresponding lowest P04 was observed for the powdered media E. Media C (approximate 10 mm gravel size) is responsible for the dips in figures 12 to 14 corresponding to better PO4 removal without excessive change in pH.

A further advantage with the present filter medium 200 is the environmentally efficient way in which exhausted medium is processed. For example, exhausted medium 200 may be dried and ground to form a fine particulate mass. This particulate mass may then be mixed with compost so as to provide a fertiliser configured for phosphorous and nitrogen soil enrichment.

## Claims

1. A phosphate removal sewage treatment medium (200, 508) comprising:
clay particles (201); and
iron oxide (202) infused within and/or coating the clay particles (201).

2. The medium as claimed in claim 1 wherein the clay particles comprise:
clay pellets;
clay granules;
pieces of clay ceramic.

3. The medium as claimed in any preceding claim comprising 5 to 30% by weight of iron oxide and 70 to 95% by weight of clay.

4. The medium as claimed in nay preceding claim wherein the clay particles (201) comprise terracotta clay.

5. The medium as claimed in any preceding claim wherein the clay particles (201) comprise an unglazed terracotta clay-based ceramic.

6. The medium as claimed in any preceding claim wherein the clay particulates (201) comprise an iron (III) oxide enriched clay.

7. The medium as claimed in any preceding claim further comprising any one or a combination of the following set of additives:
• aluminium oxide;
• calcium carbonate;
• magnesium carbonate.

8. The medium as claimed in any preceding claim further comprising powdered iron (III) oxide.

9. A sewage treatment phosphate removal filter (403, 500, 505) comprising:
a main body (501) defining an internal chamber (516), the main body (501) having an inlet (504, 507) and an outlet (503, 506);
a phosphate removal medium (200, 508) as claimed in any preceding claim accommodated within the internal chamber (516).

10. The phosphate removal filter as claimed in claim 9 wherein the main body (501) comprises any one of the following:
• a clay;
• a plastic;
• steel.

11. A filtration bed (300) for treating run-off liquor from a sewage treatment plant comprising:
water impermeable sidewalls (309) and a base (311) that define a trough;
a plurality of baskets (301, 306) arranged over the base (311) between the sidewalls (309) to provide a grid arrangement of baskets (301), the baskets (301, 306) having sidewalls that allow the through flow of water so that water to be treated can flow through the baskets (301, 306) from an input end (307) of the bed to an output (308) end of the bed;
a primary medium (305) within the baskets (301) to assist filtration of the waste water;
reed plants (312) planted in the primary medium (305);
a phosphate removal medium (200) as claimed in any one of claims 1 to 9 within the baskets (306) and configured to remove phosphate from the waste water, the phosphate removal medium (200) positioned downstream of the primary medium (305) and the reed plants (312);
wherein individual baskets (301, 306) may be removed and reinstalled at the bed (300) without disrupting the medium within neighbouring baskets (301, 306).

12. The filtration bed as claimed in claim 11 wherein the baskets (306) comprising the phosphate removal medium (200) are positioned towards the output end (308) of the bed.

13. A method of manufacturing a sewage treatment phosphate removal medium (200, 508) comprising:
obtaining iron oxide particles;
mixing the iron oxide particles with clay such that the clay is infused and/or coated with the iron oxide;
baking the iron oxide and clay; and
cutting the resultant solid clay to form clay particles (201) infused and/or coated with the iron oxide (202) to form the sewage treatment phosphate removal medium (200, 508).

14. A method of sewage treatment comprising:
filtering run-off liquor from a sewage treatment process with a phosphate removal medium (200, 508) comprising clay particles (201) infused and/or coated with iron oxide (202).
